# EUROPÄISCHE PATENTANMELDUNG

(11) **EP 0 916 408 A2**
(43) Veröffentlichungstag der Anmeldung: **19.05.1999**
(21) Anmeldenummer: 98121811.8
(22) Anmeldetag: 17.11.1998
(51) Int. Cl.: B03B 9/06, B07B 9/00

(54) **Verfahren und Vorrichtung zur Aufbereitung von Gemischen von Haushaltsabfällen und/oder Verpackungsabfällen**

(30) Priorität: 14.11.1997 DE 19750464
(71) Anmelder: U.T.G. Gesellschaft für Umwelttechnik, 41061 Mönchengladbach (DE)
(72) Erfinder: Hüskens, Jürgen, 41748 Viersen (DE)

(57) **Zusammenfassung**

Das vorliegende Verfahren betrifft die Aufbereitung von Gemischen von Haushaltsabfällen und / oder Verpackungsabfällen durch Trennung der Gemische in 2 hintereinander geschalteten Trommelsieben in 3 Fraktionen von Material unterschiedlicher Größe und Trennung der Fraktionen in Wertstoffe und Reststoffe.

## Beschreibung

Das vorliegende Verfahren betrifft die Aufbereitung von Gemischen von Haushaltsabfällen und / oder Verpackungsabfällen durch Trennung der Gemische in 2 hintereinander geschalteten Trommelsieben in 3 Fraktionen von Material unterschiedlicher Größe und Trennung der Fraktionen in Wertstoffe und Reststoffe.

Im September 1990 wurde das Duale System Deutschland-Gesellschaft für Abfallvermeidung und Sekundärrohstoffgewinnung mbH, kurz das Duale System gegründet.

Durch dieses System wird der Rücklauf des größten Teils der Verpackungen organisiert und garantiert.

Kennzeichen für Verpackungen, für die die Rohstoffindustrie die Rücknahme von Verpackungen garantiert, ist der grüne Punkt. Eine wichtige Ergänzung ist die gelbe Tonne bzw. der gelbe Sack. Hierin können die Haushalte direkt Weißblech- und Aluminiumdosen, Kunststoffverpackungen und Getränkekartons sammeln.

Daneben verfügen die Haushalte über die graue Tonne, in der sonstige Haushaltsabfälle, insbesondere auch organische Abfälle gesammelt werden. Immer enthält auch die graue Tonne noch nennenswerte Mengen an Wertstoffen. Die inhalte beider Tonnen werden naturgemäß, da sie bereits voneinander getrennt vorliegen, getrennt aufgearbeitet. Obgleich die Haushalte inzwischen demonstriert haben, daß sie gewillt sind, die getrennte Sammlung von Abfällen vorzunehmen, stellt sie eine Belastung dar, nicht nur für die Haushalte selbst, sondern auch für Transport und Aufarbeitung in getrennten Anlagen, zumal die graue Tonne oft ohne Aufbereitung in eine Müllverbrennungsanlage oder eine Deponie gelangt.

Man kann es daher als wichtige Aufgabenstellung ansehen, unter Einhaltung der Verpackungsverordnung vom 12.06.1991, zuletzt geändert am 26.10.1993, die Trennung von Abfällen in Inhalte der gelben und grauen Tonne nicht mehr vorzunehmen, sondern eine Trennanlage zu entwickeln, die in der Lage ist, aus dem ursprünglichen Abfallgemisch die Wertstoffe direkt zu gewinnen. Hierdurch würde sich auch die Gesamtmenge der Wertstoffe erhöhen.

Ausgehend von dieser Aufgabenstellung hat die Anmelderin ein Verfahren und eine Vorrichtung entwickelt, welche diese Aufgabe lösen.

Es handelt sich um ein Verfahren zur Aufarbeitung von Gemischen von Haushaltsabfällen und / oder Verpackungsabfällen, dadurch gekennzeichnet, daß das Einsatzmaterial unter Umständen nach einem Sacköffner in einem Sieb I mit einer Lochung von 180 bis 300 mm, bevorzugt von 200 bis 250 mm in 2 Fraktionen getrennt wird, daß die gröbere Fraktion manuell von groben Störstoffen befreit wird und anschließend in einem Windsichter in Folien und Papier einerseits und eine Schwerfraktion andererseits getrennt wird, wobei aus letzterer Eisenbestandteile magnetisch abgetrennt werden und der verbleibende Anteil in weitere Bestandteile getrennt werden kann, daß die feinere Fraktion aus Sieb I in einem Sieb II mit einer Lochung von 100 bis 150 mm, bevorzugt von 120 bis 140 mm in 2 Fraktionen getrennt wird, wobei Hohlkörper und Getränkekartons weitgehend in der gröberen Fraktion anfallen, daß aus der gröberen Fraktion des Siebes II nach Abtrennung von Eisenbestandteilen die NE und NE-Verbundmaterialien in einem NE-Scheider abgetrennt werden und anschließend in einem Windsichter eine Trennung in Papier und Folien als Leichtgut einerseits und Schwergut andererseits erfolgt, aus dem in einem weiteren Trennschritt die Getränkekartons, bestehend aus Papier und Polyethylenfolie abgetrennt werden und das restliche Material in Kunststoffe und Nichtkunststoffe getrennt wird, daß aus der feineren Fraktion aus Sieb II die Eisenbestandteile in 2 Stufen abgetrennt werden, anschließend die Nichteisenbestandteile einschließlich eines kleinen Anteils aluminiumbeschichteter Getränkekartons abgetrennt werden, daß der verbleibende Strom auf ein Sieb III gelangt mit einem Lochdurchmesser von 40 bis 80 mm, bevorzugt von 50 bis 70 mm, wobei in der Grobfraktion der größte Teil der Kunststoffbecher enthalten ist, aus der Grobfraktion die Nichtkunststoffe abgetrennt werden und letztere sowie die Feinfraktion aus Sieb III in eine Vorrotte geführt werden.

Ferner handelt es sich um eine Vorrichtung zur Aufbereitung von Gemischen von Haushaltsabfällen und Verpackungsabfällen, dadurch gekennzeichnet, daß diese 3 Apparatestränge zur Trennung von Gemischen aufweist, ausgehend von einem Sieb I mit einer Lochung von 180 bis 300 mm, bevorzugt von 200 bis 250 mm, das zu Strang 1, 2 und 3 führt, wobei Strang 1 zur Trennung des groben Materials aus einer manuellen Lesebühne, aus einem Windsichter, einem Magneten, einer weiteren Lesebühne, und einem Zerkleinerer besteht, für die Auftrennung der feineren Fraktion aus Sieb I ein weiteres Sieb II vorhanden ist und Strang 2 für das gröbere Material aus Sieb II aus einem Magneten, einem Nichteisenmetall-Scheider, einem Windsichter, einer Sortiereinrichtung zum Aussortieren von Getränkekartons und einer Sortiereinrichtung zum Aussortieren von Kunststoffen besteht, und daß Strang 3 für das feinere Material aus Sieb II aus einem Überbandmagneten, Trommelmagneten, Nichteisenmetall-Abscheider, einem Sieb III und Kunststoffsortierern besteht, daß die Stränge 1, 2 und 3 an mehreren Stellen untereinander verbunden sind und daß für die Wertstoffe eine Ballenpresse vorhanden ist.

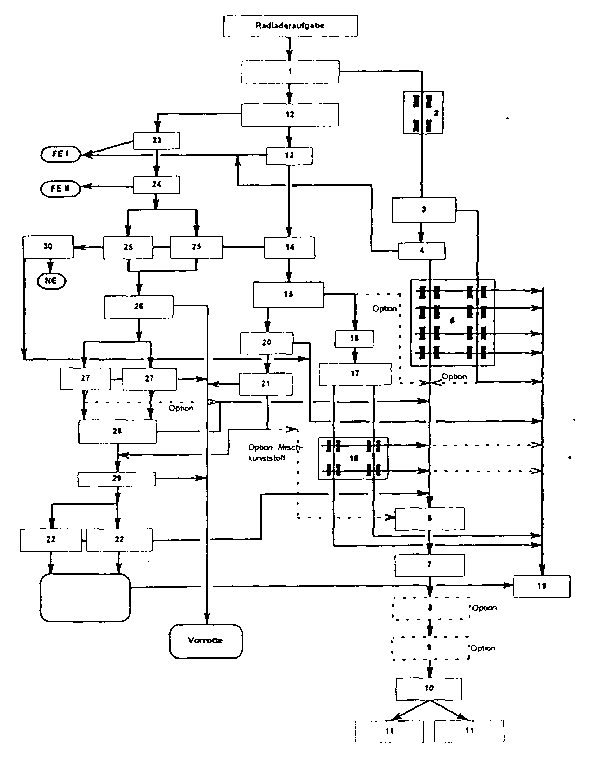

Wie in der Figur dargestellt, wird zunächst das Abfallgemisch in ein Trommelsieb (1) gegeben mit einem Sieblochdurchmesser von 180 bis 300 mm, bevorzugt von 200 bis 250 mm. Hier erfolgt eine Trennung in eine grobe und eine feine Fraktion. Beispielhaft fallen bei einem Einsatz von 22,8 t/h ca. 1,8 t/h an grobem und 21 t/h an feinem Material an.

Aus der groben Fraktion werden zunächst auf einer Lesebühne (2) manuell grobe Störstoffe oder auch Schadstoffe aussortiert. Hier kann es sich beispielsweise um Sperrmüll handeln. In einem Windsichter (3) wird der Stoffstrom nunmehr aufgeteilt in Leichtgut und Schwergut. Das Leichtgut besteht aus Folien und Papier und kann manuell oder maschinell weiter sortiert werden. Mittels eines Überbandmagneten (4) wird aus dem Schwergut das Eisenmaterial abgetrennt. Das restliche Schwergut wird auf einer weiteren Lesebühne (5) manuell nachsortiert. Je nach Bedarf können hier Holz, Kunststoff, Metalle, Steine und dergleichen aussortiert werden. Oder man entfernt nur Metalle und Steine und verwendet die sonstigen Bestandteile zur Brennstoffherstellung.

Die feinere Fraktion vom Trommelsieb (1) gelangt in ein weiteres Trommelsieb (12). Beide Siebe sind erforderlich, um eine qualitativ hochwertige Absiebung zu erhalten bzw. um eine saubere Trennung der einzelnen Komponenten zu erhalten. Die gesamte Sieblänge sollte zwischen 10 und 20 m liegen, ob in zwei Schritten oder kombiniert. Die Lochung der zweiten Absiebung im Trommelsieb (12) liegt bei 100 und 150 mm Besonders bevorzugt ist eine Lochung von 120 - 140 mm. Diese Lochung hat den Vorteil, daß in der groben Fraktion ca. 90 % aller Getränkekartons und der überwiegende Teil der Hohlkörperfraktion anfallen. Darüber hinaus ist die Feinfraktion frei von größeren Papieren und Folien, die die anschließenden automatischen Aggregate negativ beeinflussen.

Nach der Siebung (12) gelangt das grobe Material unter einen Überbandmagneten (13), der sauberes Fe-Metall abtrennt. Der von Fe befreite Strom wird dann auf einen NE-Scheider (14) gegeben. Der Vorteil dieser Anordnung ist es, daß hier schon die meisten aluminiumbeschichteten Getränkeverbunde abgetrennt werden können, die sonst im nachgeschalteten Windsichter (15) nicht immer klar dem Schwergut oder dem Leichtgut zugeordnet würden.

Im Windsichter (15) wird nun dieser von Fe, NE und dem Großteil Getränkekartons befreite Strom in Leichtgut und Schwergut aufgeteilt. Das Leichtgut, das überwiegend aus Folien und Papier besteht, wird einer Mühle (16) zugeführt. Bevorzugt wird eine Hammermühle eingesetzt, es können aber auch eine Kugelmühle oder ähnliche Mühlen zur selektiven Zerkleinerung eingesetzt werden. In der Hammermühle werden die Papiere zerkleinert, Kunststoffolien aufgrund ihrer hohen Elastizität jedoch nicht. Durch ein nachgeschaltetes weiteres Trommelsieb (17) mit einer Lochung ebenfalls zwischen 100 und 150 mm, vorzugsweise zwischen 120 und 140 mm findet dann eine Trennung zwischen dem zerkleinerten Papier im Unterlauf und den immer noch ganzen Folien im Überlauf statt. Beide Materialströme können in der Lesebühne (18) manuell kontrolliert werden. Die dort u. U. aussortierten Stoffe können entweder zum Zerkleinerer (6) in eine Restmüllverladung oder aber zu Ballen verpreßt werden. Die Fraktionen Folie und Papier gelangen über Bunkerbänder zur Ballenpresse (19).

Alternativ kann das Leichtgut aus dem Windsichter ohne weitere Aufbereitung direkt dem Zerkleinerer (6) aufgegeben oder als heizwertreicher Rest verpreßt werden.

Das Schwergut nach dem Windsichter (15) wird einer automatischen Einrichtung zur Abtrennung von Getränkekartons zugeführt (20). Dieses Gerät erkennt mit Nahinfrarottechnik den beim Getränkekarton vorhandenen Verbund PE-Folie und Papier. Mittels Druckluft wird das als Getränkekarton erkannte Objekt aus dem Materialstrom gefördert. Diese Geräte sind in anderen Bereichen als Stand als Technik bekannt. Da durch den Windsichter (15) alle leichten flugfähigen Stoffe entnommen wurden, besteht der Stoffstrom zur Sortiereinrichtung (20) nur noch aus Materialen, die eine hohe Zuführgeschwindigkeit von 2 - 3,5 m/Sek., ohne die Position der Objekte z.B. auf einem Förderband zu ändern, erlauben.

Gleiches gilt für die nachfolgende automatische Sortiereinrichtung (21). Hier werden ebenfalls mittels Nahinfrarot oder nach Form, Größe und Umrißerkennung, evtl. ergänzt durch z.B. eine Farberkennung, Kunststoffe von Nichtkunststoffen getrennt. Die Kunststofffraktion kann einer Sortiereinrichtung zugeführt werden, in der die Kunststoffe nach Sorten getrennt werden. Hierzu wird die abgetrennte Kunststofffraktion über ein Sieb (29) auf je nach Durchsatz 1 -2 automatische Sortiereinrichtungen (22) gegeben, die dann das Kunststoffgemisch nach Materialart trennen. Die nun nach Sorten getrennten Kunststoffe werden in der Ballenpresse (19) verpreßt und dann vermarktet.

Die kleine Fraktion des Trommelsiebes (12), der Hauptmassenstrom dieser Anlage, gelangt zu einem Überbandmagneten (23). Auch das hier abgeschiedene magnetische Material ist aufgrund der Wahl der Siebschnitte sauber. Nach der Fe-Trennung mittels Überbandmagnet (23) ist eine weitere Fe-Abtrennung mittels Trommelmagnet (24) oder magnetischer Bandkopfrolle (24) vorgesehen, um die Kleineisenteile abzutrennen, die durch einen Überbandmagneten nicht erfaßt werden können. Würde man den gesamten Materialstrom ausschließlich mit einem Trommelmagneten von Fe befreien, so wäre dieses Material auch bei aushebendem Trommelmagnet deutlich verschmutzter als bei Einsatz eines Überbandmagneten.

Nach der Fe-Abtrennung wird das Material ebenfalls je nach Durchsatz auf 1 - 2 NE-Scheider (25) gegeben. Hier werden NE-Metalle und einige aluminiumbeschichtete Getränkekartons abgetrennt. Dieses NE-Gemisch gelangt zusammen mit der NE-Menge aus NE-Abscheider (14) auf ein automatisches Sortiermodul (30), um die Getränkekartons von NE-Metallen zu trennen. Die Geräte (30) sind z.T. in der Lage, auch die verschiedenen Metalle zu erkennen. Somit ist auch die Möglichkeit gegeben, den NE-Stoffstrom nach Metallarten aufzutrennen. Nach der NE-Abtrennung gelangt der Stoffstrom zum Trommelsieb (26) und wird dort bei einem Sieblochdurchmesser von 40 - 80 mm, bevorzugt bei 50 - 70 mm, abgesiebt. Bei Wahl dieses Lochdurchmessers ist gewährleistet, daß die im Material enthaltenen Becher zum größten Teil im groben Stoffstrom enthalten sind, die aus diesem abgetrennt werden können. Im Feinstoffstrom des Siebes (26) sind zwar noch Kunststoffe enthalten, die man grundsätzlich noch aussortieren kann, jedoch ist der Aufwand unangemessen hoch.

Die gröbere Fraktion wird zu je nach Durchsatz 1 - 3 automatischen Sortieraggregaten (27) geführt. Diese Sortiermodule trennen wie Apparat 21 den Materialstrom in Kunststoffe und Nichtkunststoffe oder nach den Kriterien Form / Umriß in Wertstoffe und Nichtwertstoffe. Das abgetrennte Kunststoffgemisch kann einem Windsichter (28) zugeführt werden, um z.B. noch enthaltene kleine Folien und mitgeschleppte Verunreinigungen/Anhaftungen zu entfernen.

Als Alternative kann das gesamte Kunststoffgemisch direkt dem Zerkleinerer (6) zugeführt werden. Wird der Windsichter (28) durchfahren, so wird das Schwergut zusammen mit dem Kunststoff von Apparat 21 einem Kontrollsieb (29) zugeführt. Dieses Sieb weist eine Lochung von 30 - 70 mm, bevorzugt 40 - 60 mm, auf. Hier werden Kleinteile sowie noch vorhandene Anhaftungen und Verschmutzungen abgetrennt, die die Kunststoffsortentrennung (22) und die Trennung von biologisch abbaubaren Stoffen negativ beeinflussen würden.

Die Reststoffe vom Trommelsieb (26), Sieb (29) und die Nichtkunststoffe aus den Sortieraggregaten (27) und (21) werden gemeinsam einer Restmüllverladung oder einer Rotte zugeführt. Es ist möglich, die gesamten abgetrennten heizwertreichen Fraktionen dem Zerkleinerer (6) zuzuführen oder nur einzelne Chargen, z.B. nur Mischkunststoffe nach Spezifikation DSD, um Mischkunststoffpellets herzustellen, die dann zur Vergasung oder als Reduktionsmittel in die Stahlindustrie gelangen.

Alle in der Anlage aussortierten Wertstoffe werden vorzugsweise in Bunkerbändern gesammelt und bei Bedarf der Ballenpresse (19) zugeführt und dort verpreßt. Nach dem Vorzerkleinerer (6), der als Einwellenzerkleinerer oder vorzugsweise als Rotorschere ausgebildet ist, kann eine Nachzerkleinerung (7) auf eine Kantenlänge zwischen 30 und 180 mm, vorzugsweise auf 80 - 120 mm erfolgen. Nach der ein- oder mehrstufigen Zerkleinerung erfolgt eine PVC-Abtrennung (8) bzw. eine Trennung in Kunststoffe einerseits und PVC und Reste andererseits. Es ist wesentlich, möglichst viel PVC oder andere chlorhaltige Kunststoffe zu entfernen. Die Reinheit der ausgetragenen chlorhaltigen Kunststoffe spielt dabei eine untergeordnete Rolle. Bei der thermischen Verwertung der erhaltenen Kunststoffgemische sind Chlorkomponenten sehr störend.

Nach der PVC-Abtrennung (8) gelangt das Material je nach Bedarf in einen Trockner (9). Soll möglichst viel heizwertreiches Material zerkleinert bzw. pelletiert werden, so werden die Windsichter (15, 3 und 28) so eingestellt, daß sie nicht nur leichte Papiere und Folien abtrennen, sondern auch noch schwerere, feuchte Papiere, Pappen und dickwandige Kunststoffe. In diesem Falle ist ein Trockner erforderlich, da anderenfalls unter Umständen gewünschte formstabile Pellets nicht herstellbar sind. Anschließend können die Materialien in einem Silo (10) gelagert werden und von dort in Pelletpressen (11) zu Pellets verarbeitet werden.

Wie die Verfahrensbeschreibung bzw. Vorrichtungsbeschreibung zeigen, ist eine nahezu vollständige Abtrennung der Einzelkomponenten aus einem Gemisch von Haushaltsabfällen und Verpackungsabfällen möglich. Als von besonderer Bedeutung erwies sich die Hintereinanderschaltung von 2 Sieben mit den angegebenen Lochdurchmessern und die fast vollständige Automatisation, die durch diese Siebschnitte die spezielle Verfahrenstechnik und die besondere Geräteauswahl erst möglich wird.

Eine wichtige Anwendung der Erfindung ist die Erzeugung von leicht handhabbarem Brennstoff aus Kunststoffabfällen zur thermischen Verwertung derselben, wobei bestimmte Spezifikationen, z.B. der Schwermetallgehalt eingestellt werden durch richtiges Mischen der Fraktionen.

## Patentansprüche

1. Verfahren zur Aufbereitung von Gemischen von Haushaltsabfällen und / oder Verpackungsabfällen, dadurch gekennzeichnet, daß das Einsatzmaterial in einem Sieb I mit einer Lochung von 180 bis 300 mm, bevorzugt von 200 bis 250 mm in 2 Fraktionen getrennt wird, daß die gröbere Fraktion manuell von groben Störstoffen befreit wird und anschließend in einem Windsichter in Folien und Papier einerseits und eine Schwerfraktion andererseits getrennt wird, wobei aus letzterer Eisenbestandteile magnetisch abgetrennt werden und der verbleibende Anteil in weitere Bestandteile getrennt werden kann, daß die feinere Fraktion aus Sieb I in einem Sieb II mit einer Lochung von 100 bis 150 mm, bevorzugt von 120 und 140 mm in 2 Fraktionen getrennt wird, wobei Hohlkörper und Getränkekartons weitgehend in der gröberen Fraktion anfallen, daß aus der gröberen Fraktion des Siebes II nach Abtrennung von Eisenbestandteilen die NE und NE-Verbundmaterialien in einem NE-Scheider abgetrennt werden und anschließend in einem Windsichter eine Trennung in Papier und Folien als Leichtgut einerseits und Schwergut andererseits erfolgt, aus dem in einem weiteren Trennschritt die Getränkekartons, bestehend aus Papier und Polyethylenfolie abgetrennt werden und das restliche Material in Kunststoffe und Nichtkunststoffe getrennt wird, daß aus der feineren Fraktion aus Sieb II die Eisenbestandteile in 2 Stufen abgetrennt werden, anschließend die Nichteisenbestandteile einschließlich eines kleinen Anteils aluminiumbeschichteter Getränkekartons abgetrennt werden, daß der verbleibende Strom auf ein Sieb III gelangt mit einem Lochdurchmesser von 40 bis 80 mm, bevorzugt von 50 bis 70 mm, wobei in der Grobfraktion der größte Teil der Kunststoffbecher enthalten ist, aus der Grobfraktion die Nichtkunststoffe abgetrennt werden und letztere sowie die Feinfraktion aus Sieb III in eine Vorrotte geführt werden.

2. Verfahren nach Anspruch 1, dadurch gekennzeichnet, daß die Trennsiebe Trommelsiebe sind.

3. Verfahren nach den Ansprüchen 1 und 2, dadurch gekennzeichnet, daß das gesamte abgetrennte NE / NE-Verbundmaterial durch Nahinfrarottechnik in Getränkekartons und NE getrennt wird, daß die Trennsiebe Trommelsiebe mit außen am Siebloch angebrachten Rohrstutzen von gleichem Durchmesser und einer Länge zwischen 100 - 200 mm sind.

4. Verfahren nach den Ansprüchen 1 bis 3, dadurch gekennzeichnet, daß aus der gröberen Fraktion aus Sieb I nach Abtrennen von Papier und Folien eine Abtrennung von Holz und/oder restlichem Papier und/oder Emballagen und/oder Metallen erfolgt.

5. Verfahren nach den Ansprüchen 1 bis 4, dadurch gekennzeichnet, daß die gröbere Fraktion ganz oder teilweise einer Zerkleinerung und ggf. Brennstoffherstellung zugeführt wird.

6. Verfahren nach Anspruch 1, dadurch gekennzeichnet, daß aus dem Schwergut aus Sieb II die dort noch vorhandenen Getränkekartons mittels Nahinfrarottechnik abgetrennt werden.

7. Verfahren nach Anspruch 6, dadurch gekennzeichnet, daß nach Abtrennung der Getränkekartons in einer Sortiereinrichtung eine Trennung in Kunststoffe und Reststoffe oder eine Form- / Umriß- / Größenerkennung in Wertstoff und Nichtwertstoff erfolgt, wobei letztere einer Vorrotte zugeführt werden.

8. Verfahren nach den Ansprüchen 1 bis 7, dadurch gekennzeichnet, daß die gewonnenen Wertstoffe thermisch verwertet werden.

9. Verfahren nach Anspruch 8, dadurch gekennzeichnet, daß aus den Wertstoffen vor der thermischen Verwertung PVC abgetrennt wird oder die Kunststofftrenner Kunststoff ohne PVC austrennen.

10. Vorrichtung zur Aufbereitung von Gemischen von Haushaltsabfällen und Verpackungsabfällen, dadurch gekennzeichnet, daß diese 3 Apparatestränge zur Trennung von Gemischen aufweist, ausgehend von einem Sieb I mit einer Lochung von 180 bis 300 mm, bevorzugt von 200 bis 250 mm, das zu Strang 1, 2 und 3 führt, wobei Strang 1 zur Trennung des groben Materials aus einer manuellen Lesebühne, aus einem Windsichter, einem Magneten, einer weiteren Lesebühne, und einem Zerkleinerer besteht, für die Auftrennung der feineren Fraktion aus Sieb I ein weiteres Sieb II vorhanden ist und Strang 2 für das gröbere Material aus Sieb II aus einem Magneten, einem Nichteisenmetall-Scheider, einem Windsichter, einer Sortiereinrichtung zum Aussortieren von Getränkekartons und einer Sortiereinrichtung zum Aussortieren von Kunststoffen besteht, und daß Strang 3 für das feinere Material aus Sieb II aus einem Überbandmagneten, Trommelmagneten, Nichteisenmetall-Abscheider, einem Sieb III und Kunststoffsortierern besteht, daß die Stränge 1,2 und 3 an mehreren Stellen untereinander verbunden sind und daß für die Wertstoffe eine Ballenpresse vorhanden ist.

11. Vorrichtung nach Anspruch 10, dadurch gekennzeichnet, daß die Siebe I, II und III Trommelsiebe mit Rohrstutzen sind.

12. Vorrichtung nach Anspruch 10, dadurch gekennzeichnet, daß die Getränkekartonsortierer und Kunststoffsortierer in Strang 2 Nahinfrarottechnik aufweisen.
